Europäisches Patentamt

European Patent Office

Office européen des brevets

(11) Publication number: **0 083 326**
**B1**

# EUROPEAN PATENT SPECIFICATION

(45) Date of publication of patent specification: **20.08.86**

(21) Application number: **82850249.2**

(22) Date of filing: **02.12.82**

(51) Int. Cl.⁴: **H 02 P 7/62, H 02 M 7/08, D 06 F 37/30**

(54) Method and device for controlling a brushless alternating current motor.

(30) Priority: **18.12.81 CH 8097/81**

(43) Date of publication of application:
**06.07.83 Bulletin 83/27**

(45) Publication of the grant of the patent:
**20.08.86 Bulletin 86/34**

(84) Designated Contracting States:
**AT BE CH DE FR GB IT LI LU NL SE**

(56) References cited:
**FR-A-2 439 503**
**GB-A-1 020 214**
**US-A-3 402 326**
**US-A-4 051 418**

(73) Proprietor: **Institut Cerac S.A.**
**Chemin des Larges Pièces**
**CH-1024 Ecublens (CH)**

(72) Inventor: **Hartwig, Carl Sverker Magnusson**
**Gripsvallsvägen 7**
**S-183 46 Täby (SE)**
Inventor: **Ljung, Erik Anders**
**Färgargardstorget 16**
**S-116 43 Stockholm (SE)**
Inventor: **Obel, Erik Martin**
**Bergavägen 5**
**S-182 33 Danderyd (SE)**

(74) Representative: **Grundfelt, Gunnar et al**
**c/o Atlas Copco Management Consulting AB**
**Patent Department**
**S-105 23 Stockholm (SE)**

Courier Press, Leamington Spa, England.

## Description

The present invention relates to a method and a device for controlling a brushless alternating current motor driven by an inverter connected to a constant voltage direct current supply.

In prior art solutions for controlling motors of the above mentioned kind it has been customary to sense the current supplied to the motor terminals. Since the current supplied to the motor terminals contains both active and reactive components more or less sophisticated devices have been used to obtain some information about the efficiency of operation of the motor. Examples of this are given in U.S. patents 3 619 749 and 4 207 510.

In another prior art solution, GB—A—1020214, the direct current supplied to the inverter is sensed. This signal is added to a control input signal CS. The signal depending on the sensed direct current is used to compensate for the decrease in motor speed obtained when the motor torque increases. The motor is thus supplied with an increasing frequency current when the torque increases to obtain a substantially constant motor speed. This control method cannot be used over any substantial torque range because sooner or later the motor will stall resulting in high motor currents that will overload the motor windings.

The present invention uses a different approach in that all information needed is taken out by means of sensing the direct current fed to the inverter and passing the sensed signal through a peak detector and a regulator, as defined in the appended independent claims, to obtain a control signal for controlling the operation of the inverter. Since the voltage and frequency supplied to the motor terminals are entirely controlled by controlling the operation of the inverter, the voltage of the direct current source will be substantially constant. This means that all variations in the operational state of the motor are reflected in variations in the direct current supplied to the inverter.

The present invention, which is defined by the appended independent claims, is mainly characterized in that a peak value of the direct current is sensed and that the frequency of the current supplied to the motor terminals is decreased by a regulator if the peak value exceeds a preset limit value.

Further features of this application are the subject of divisional applications EP—A—156282 and 156283.

According to an advantageous embodiment of the invention rectified mean value of the direct current is sensed. This value is then divided by the frequency controlling signal to obtain a voltage controlling signal that is proportional to the torque of the motor. This latter signal is used to increase the voltage supplied to the motor when the torque demand increases. This ensures high efficiency of operation of the motor.

According to a further advantageous embodiment of the invention negative pulses obtained when the switching elements of the inverter are switched off are sensed. The sensed signal is then used to control the voltage supplied to the motor terminals such that these pulses obtain a predetermined level. The magnitude of these negative pulses reflect the magnetic state of the motor. By controlling the magnitude of the pulses it is possible to obtain sufficient magnetization of the motor to give a high power to weight ratio yet avoiding oversaturation which would result in unacceptable losses.

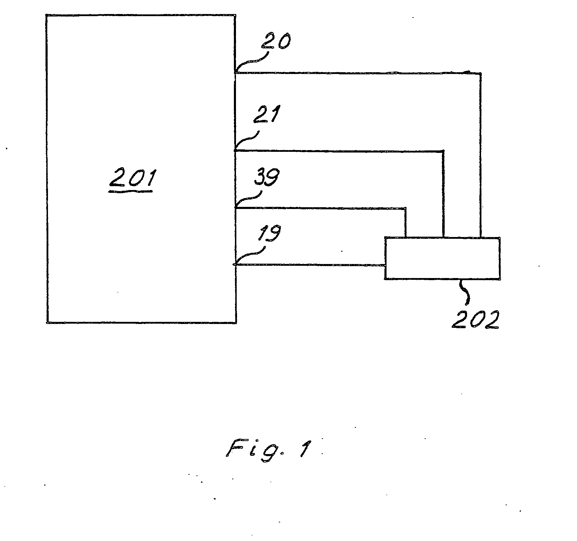

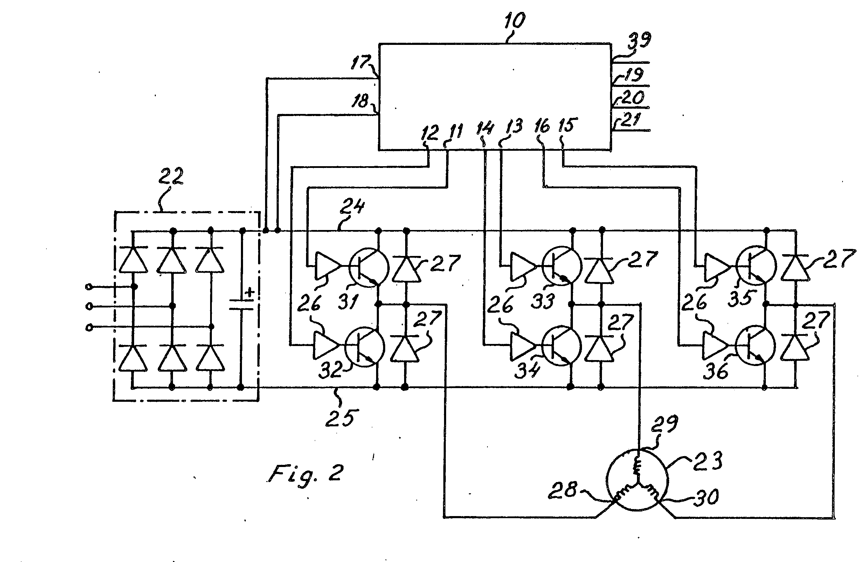

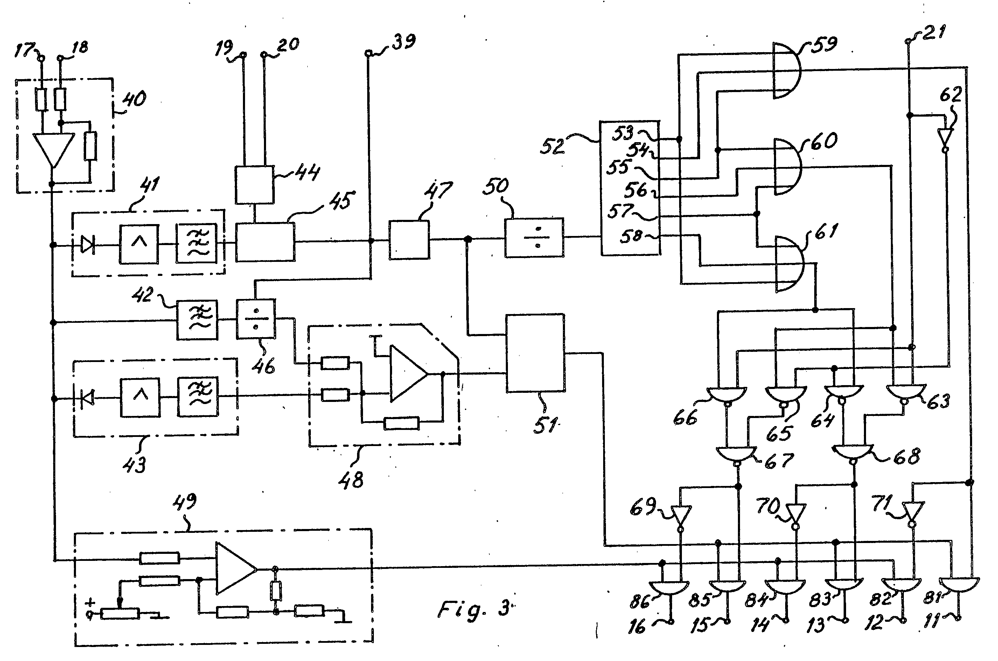

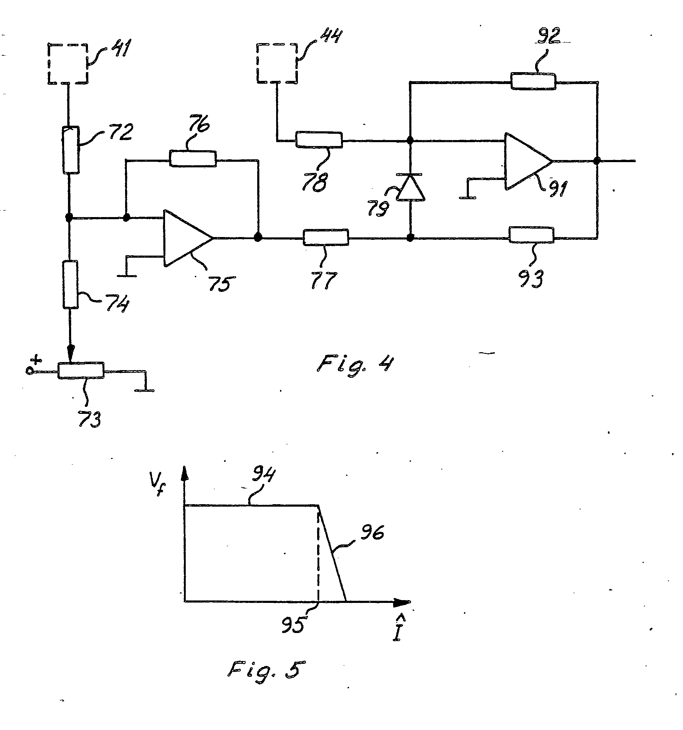

An embodiment of the invention is described below with reference to the accompanying drawings in which Fig. 1 shows a washing machine with part of the control system. Fig. 2 shows the motor drive system. Fig. 3 shows the controller of Fig. 2. Fig. 4 shows a regulator of Fig. 3. Fig. 5 shows a transfer function for the regulator according to Fig. 4.

The embodiment of the invention shown in Fig. 1 comprises a washing machine 201. This is only an example. The invention can be applied to virtually any machine using a brushless alternating current motor. The washing machine of Fig. 1 includes the motor, the inverter and other power circuits feeding the motor and the major part of the control system. These parts are described more in detail in connection with Figs. 2—5. Washing machine 201 is provided with an input 19 for the supply of a frequency demand signal. This signal is delivered by a timer 202 in which the washing program is stored. The frequency demand signal is the basic demand for rotational speed. Timer 202 also delivers start signals to input 20. Washing machine 201 is further provided with an input 21 for the selection of rotational direction and an output 39 which delivers a signal corresponding to the rotational speed of the motor. When the rotational speed of the motor in the washing machine is substantially zero output 39 becomes logical zero. Only then is the signal fed to input 21 allowed to change its logical state so that a start signal from timer 202 will cause rotation in the opposite direction.

The drive system shown in Fig. 2 comprises a threephase rectifier 22 which is connected to a standard fixed frequency mains supply. The rectifier delivers direct current of substantially constant voltage to conduits 24, 25, which constitute a positive 24 and a negative 25 terminal of a direct current supply for an inverter. The inverter comprises six switching elements 31—36 for successively connecting motor terminals 28, 29, 30 on a brushless alternating current motor 23 to the positive terminal 24 and the negative terminal 25 of the direct current supply. The switching elements are in the drawing shown as transistors but could, of course, be combinations of thyristors or other elements. A diode 27 is placed in anti-parallel over each transistor to take care of reactive currents at the switching off of the transistor. To control the inverter, control signals are supplied from outputs 11—16 on a controller 10 as shown in Fig. 3. These control signals are supplied via amplifiers 26 to the base of respective transistor. Controller 10 is provided with inputs 17, 18 through which the direct current in conduit 24 is sensed. Controller 10 is further provided with an output 39 and inputs 19, 20, 21. Output 39 is only used if it during operation is desired to change the direction of rotation of the motor. The direction of rotation is selected by applying a logical signal to input 21. If rotation in only one direction is desired input 21 is connected either to a positive voltage or common. The speed of motor 23 may be changed by variation of a voltage applied to input 19. If, as for instance in a grinding machine, it is desired to drive the motor at a certain speed, input 19 is connected to a suitable voltage corresponding to the desired speed. Input 20 is intended for receiving a start/stop signal by which rotation or no rotation is chosen.

Controller 10, which is shown more in detail in Fig. 3, comprises a sensing means 40 for sensing the direct current in conduit 24. This current is presented as a voltage between inputs 17 and 18. The output signal of sensing means 40 is applied to a first peak detector 41, a low-pass filter 42, a second peak detector 43 and a comparator 49. Peak detectors 41 and 43 comprise diodes to react on positive and negative signals respectively. The peak detectors also comprise low-pass filters. First peak detector 41 preferably has a time constant of about 4/f where f is the maximum fundamental frequency of the current supplied to motor 23. The cut-off frequency, −3dB, of peak detector 41 is preferably about 0.1 f. Lowpass filter 42 preferably has about the same cut-off frequency. Second peak detector 43 preferably has a time constant of about 1/f and a cut-off frequency of about 0.5 f.

The peak value signal from peak detector 41 is supplied to a first regulator 45, which is shown more in detail in Fig. 4. Input signals from inputs 19 and 20 are supplied to a means 44 in form of a ramp generator. Ramp generator 44 comprises one or two operational amplifiers connected as integrators to supply regulator 45 with an increasing ramp voltage at motor start acceleration and a decreasing ramp voltage at motor stop deceleration. In this way it is possible to avoid that the normal speed maximum load current is exceeded when the motor is started or stopped. A change in the speed demand signal at input 19 is also integrated by ramp generator 44. Thus it takes some time before the output of ramp generator 44 becomes fully adapted to the input signals.

The peak value signal from first peak detector 41 is applied to one of the inputs of operational amplifier 75 via resistor 72. This signal is compared with a reference signal preset on variable resistor 73 and fed to the amplifier via resistor 74. The amplifier is provided with a feed-back resistor 76. The output signal of amplifier 75 is via a resistor 77 applied to diode 79. The output signal from ramp generator 44 is via resistor 78 supplied to one of the inputs of operational amplifier 91. Amplifier 91 is provided with a first feed-back resistor 92 and a second feed-back resistor 93 in series with diode 79. Resistor 93 has a much lower resistance than resistor 92. Preferably the ratio is about 1/20. If the output signal from amplifier 75, measured at diode 79, is more negative than the output signal from amplifier 91, measured at diode 79, is positive, diode 79 is reverse-biased. The closed loop amplification of amplifier 91 is then high. Regulator 45 then operates according to line 94 in Fig. 5, assuming constant signal from ramp generator 44. If the signal from first peak detector 41 increases, the output signal from amplifier 75 becomes less negative and at a certain signal level, level 95 in Fig. 5, which is preset on resistor 73, diode 79 becomes forward-biased. The closed loop amplification of amplifier 91 is now drastically reduced so that first regulator 45 delivers a frequency controlling signal according to line 96 in Fig. 5. This signal becomes zero at about 120% of the signal at level 95. The frequency controlling signal from the output of amplifier 91 is delivered to a voltage-controlled oscillator 47, output 39 and an analog divider 46, e.g. Analog Devices AD 534. The voltage-controlled oscillator produces an output signal whose frequency is proportional to the input voltage.

The rectified mean value signal obtained from low-pass filter 42 corresponds to the power supplied to motor 23 because the voltage of the direct current supply 24, 25 is substantially constant. This signal is supplied to divider 46 where it is divided with the frequency controlling signal, which is the demand signal for rotational speed of motor 23. The output signal of divider 46 will thus correspond to the torque demand from motor 23. This output signal, first voltage controlling signal, is supplied to a second regulator 48. The negative peak value signal, second voltage controlling signal, obtained from second peak detector 43 is also supplied to regulator 48 so that the output signal of regulator 48 becomes proportional to the difference between the first and the second voltage controlling signals. The negative peak value signal from peak detector 43 corresponds to the degree of magnetization of motor 23. This signal is obtained from negative pulses which are fed back to the direct current source when the transistors 31—36 are switched off. By controlling the level of these negative pulses it is possible to obtain a predetermined level of magnetization of the motor allowing both a high power to weight ratio and the avoiding of oversaturation, which would give unacceptable losses.

If the signal from sensing means 40 exceeds a predetermined level the output of comparator 49 becomes low. As a result outputs 12, 14 and 16 of AND gates 82, 84 and 86 respectively will be low. This means that the lower transistors 32, 34 and 36 of the inverter will be turned off so that the motor terminals 28, 29 and 30 will be cut off from the negative terminal 25 of the direct current supply. This cutting off thus functions as transient current protection for the inverter.

The output signal from voltage-controlled oscillator 47 is supplied to a timer 51, preferably an industrial timer of standard type 555, and to a divider 50. Divider 50 is preferably a programmable counter which delivers a pulse train having a frequency which is equal to the frequency of the input signal divided by a chosen constant. Timer 51 delivers a pulse train whose frequency is equal to the frequency of the output signal from voltage-controlled oscillator 47. The pulse width is controlled by the output signal from second regulator 48. This pulse train is supplied to AND gates 81, 83 and 85. The pulse train from divider 50 is supplied as clock signal to ring counter 52. In the ring counter a 1 and five 0's are stored. The 1 is shifted around by the pulse train from output 53 through 58 and back to 53. This makes one period of the fundamental frequency of the current supplied to motor 23. Outputs 53—58 of ring counter 52 are decoded by OR gates 59, 60 and 61. The output of each of these gates is high half the time and low half the time. A logic signal inverter 62 and NAND gates 63—68 are provided for selecting direction of rotation of motor 23. The output signals of gates 59, 60 and 61 are supplied to AND gates 81—86 for controlling the actuation of switching transistors 31—36 in the inverter. The inputs of gates 82, 84 and 86 are provided with logic signal inverters 71, 70 and 69 respectively.

Because the pulse width of the pulses leaving timer 51 remains constant independent of frequency if the signal from regulator 48 is constant, the mean value over half a period of the fundamental frequency of the voltage applied to any of the motor terminals will change simultaneously with the frequency as required by basic electromagnetic laws. Additional control of the mean value voltage is obtained by variation of the pulse width, which is controlled by regulator 48.

## Claims

1. A method of controlling a brushless alternating current motor (23) driven by an inverter (31—36) connected to a direct current supply (24, 25), whereby alternating current to be supplied to motor terminals (28, 29, 30) on the brushless alternating current motor is created by controlled actuation of switching means in the inverter to successively connect the motor terminals to a positive terminal (24) and a negative terminal (25) of the direct current supply, and the direct current supplied to the inverter (31—36) is sensed to obtain a signal corresponding to the sensed current, characterized in that said signal is passed through a first peak detector (41) having a predetermined time constant to obtain a peak value signal, that said peak value signal is supplied to a first regulator (45) to obtain a frequency controlling signal for controlling the frequency of said alternating current and that said frequency controlling signal is decreased by said first regulator when said peak value signal exceeeds a predetermined value.

2. A method according to claim 1, characterized in that said signal is passed through a low-pass filter (42) to obtain a rectified mean value signal, that said rectified mean value signal is supplied to a divider (46) where the rectified mean value signal is divided by said frequency controlling signal to obtain a first voltage controlling signal, that said first voltage controlling signal is supplied to a second regulator (48) such that an output signal of said second regulator changes its amplitude in the same direction as said first voltage controlling signal and that said output signal controls said alternating current.

3. A method according to claim 2, characterized in that negative pulses appearing in said signal when said switching means are turned off are passed through a second peak detector (43) to obtain a second voltage controlling signal and that said second voltage controlling signal is supplied to said second regulator (48) such that the change in amplitude of said output signal is opposite to the change caused by said first voltage controlling signal.

4. A device for controlling a brushless alternating current motor comprising an inverter connected to a direct current supply (24, 25), said inverter comprising switching means (31—36) for successively connecting motor terminals (28, 29, 30) on the brushless alternating current motor (23) to a positive terminal (24) and a negative terminal (25) of the direct current supply, and sensing means (40) for sensing the direct current, characterized in that said sensing means is connected to a first peak detector (41) having a predetermined time constant, said first peak detector producing a peak value signal corresponding to the sensed current, said first peak detector being connected to a first regulator (45) for producing a frequency controlling signal for controlling the turning on and turning off of said switching means (31—36) and said first regulator having such a transfer function that said frequency controlling signal is decreased by said first regulator when said peak value signal exceeds a predetermined value.

5. A device according to claim 4, characterized by a low-pass filter (42) being connected to said sensing means (40), said low-pass filter producing a rectified mean value signal corresponding to the sensed current, a divider (46) connected to said low-pass filter and to said first regulator (45), said divider producing a first voltage controlling signal by dividing the rectified mean value signal by the frequency controlling signal and a second regulator (48) connected to said divider for producing an output signal which changes its amplitude in the same direction as said first voltage controlling signal, whereby said output signal controls the time said switching means (31—36) are turned on.

6. A device according to claim 5, characterized by a second peak detector (43) being connected to said sensing means (40), said second peak detector producing a second voltage controlling signal corresponding to negative pulses sensed when said switching means (31—36) are turned off, said second peak detector being connected to said second regulator (48) such that a change in amplitude of said second voltage controlling signal causes a change in amplitude of said output signal being opposite to the change caused by said first voltage controlling signal.

## Patentansprüche

1. Verfahren zur Regelung eines durch einen an eine Gleichstromversorgung (24, 25) angeschlossenen Inverter angetriebenen bürstenlosen Wechselstromotors (23), wobei den Motorklemmen (28, 29, 30) des bürtenlosen Wechselstromotors zuzuführender Wechselstrom dadurch erzeugt wird, daß Schaltmittel im Inverter gesteuert betätigt werden, um nacheinander die Motorklemmen mit einem positiven Anschluß (24) und einem negativen Anschluß (25) der Gleichstromversorgung zu verbinden, und wobei der dem Inverter (31—36) eingespeiste Gleichstrom abgetastet wird, um ein dem abgetasteten Strom entsprechendes Signal zu erhalten, dadurch gekennzeichnet, daß dieses Signal durch einen ersten Spitzendetektor (41) mit einer vorgegebenen Zeitkonstante geleitet wird, um ein Spitzenwertsignal zu erhalten, daß dieses Spitzenwertsignal einem ersten Regler (45) zugeleitet wird, um ein frequenzsteuerndes Signal zur Regelung der Frequenz des Wechselstroms zu erhalten, und daß diese frequenzsteuernde Signal durch den ersten Regler geschwächt wird, wenn das Spitzenwertsignal einen vorgegebenen Wert überschreitet.

2. Verfahren nach Anspruch 1, dadurch gekennzeichnet, daß dieses Signal durch einen Tiefpaß (42) geleitet wird, um ein gleichgerichtetes Mittelwertsignal zu erhalten, welches einem Teiler (46) zugeleitet wird, in welchem das gleichgerichtete Mittelwertsignal durch das frequenzsteuernde Signal geteilt wird, um ein erstes spannungssteuerndes Signal zu erhalten, welches einem zweiten Regler (48) zugeleitet wird, sodaß ein Ausgangssignal des zweiten Reglers seine Amplitude in derselben Richtung wie das erste spannungssteuernde Signal ändert, und daß dieses Ausgangssignal den Wechselstrom regelt.

3. Verfahren nach Anspruch 2, dadurch gekennzeichnet, daß die in diesem Signal erscheinenden negativen Impulse, wenn die Schaltorgane abgeschaltet werden, durch einen zweiten Spitzendetektor (43) geleitet werden, um ein zweites spannungssteuerndes Signal zu erhalten, und daß dieses zweite spannungssteuernde Signal dem zweiten Regler (48) eingespeist wird, sodaß die Amplitudenänderung des Ausgangssignals der durch das erste spannungssteuernde Signal verursachten Änderung entgegengesetzt ist.

4. Gerät zur Regelung eines bürstenlosen Wechselstrommotors, bestehend aus einem an eine Gleichstromversorgung (24, 25) angeschlossenen Inverter, wobei dieser Inverter Schaltmittel (31—36) aufweist, um Motorklemmen (28, 29, 30) am bürstenlosen Wechselstrommotor (23) nacheinander mit einem positiven Anschluß (24) und einem negativen Anschluß (25) der Gleichstromversorgung zu verbinden, und aus einer Anordnung (40) zum Abtasten des Gleichstromes, dadurch gekennzeichnet, daß die Abtastanordnung mit einem ersten Spitzendetektor (41) mit einer vorgegebenen Zeitkonstante verbunden ist, wobei dieser erste Spitzendetektor ein dem festgestellten Strom entsprechendes Spitzenwertsignal erzeugt, wobei der erste Spitzenwertdetektor mit einem ersten Regler (45) verbunden ist, um ein frequenzsteuerndes Signal zur Steuerung des Ein- und Abschaltens der Schaltmittel (31—36) erzeugt und der erste Regler eine derartige Übertragungsfunktion hat, daß dieses frequenzsteuernde Signal durch diesen ersten Regler vermindert wird, wenn das Spitzenwertsignal einen vorgegebenen Wert überschreitet.

5. Gerät nach Anspruch 4, gekennzeichnet durch einen mit der Abtastanordnung (40) verbundenen Tiefpaß (42), welcher ein gleichgerichtete Mittelwertsignal entsprechend dem abgetasteten Strom erzeugt, durch einen mit dem Tiefpaß und dem ersten Regler (45) verbundenen Teiler (46), welcher ein erstes spannungssteuerndes Signal durch Teilung des gleichgerichteten Mittelwertsignals durch das frequenzsteuernde Signal erzeugt, und durch einen mit dem Teiler verbundenen zweiten Regler (48) zur Erzeugung eines Ausgangssignals, welches seine Amplitude in derselben Richtung wie das erste spannungssteuernde Signal ändert, wodurch dieses Ausgangssignal die Zeitspanne steuert, in welcher die Schaltmittel (31—36) eingeschaltet sind.

6. Gerät nach Anspruch 5, gekennzeichnet durch einen zweiten Spitzendetektor (43), der mit der Abtastanordnung (40) verbunden ist und ein zweites spannungssteuerndes Signal entsprechend abgetasteten negativen Impulsen erzeugt, wenn die Schaltmittel (31—36) abgeschaltet sind, und daß der zweite Spitzendetektor mit dem zweiten Regler derart verbunden ist, daß eine Amplitudenänderung des zweiten spannungssteuernden Signals eine Amplitudenänderung des Ausgangssignals entgegengesetzt zur durch das erste spannungssteuernde Signal verursachten Änderung hervorruft.

## Revendications

1. Procédé de commande d'un moteur à courant alternatif sans balai (23) entraîné par un inverseur (31—36) relié à une alimentation en courant continu (24, 25), le courant alternatif étant appliqué aux bornes (28, 29, 30) du moteur à courant alternatif sans balai par la mise en oeuvre commandée de moyens de commutation dans l'inverseur pour brancher successivement les bornes du moteur sur une borne positive (24) et une borne négative (25) de l'alimentation en courant continu, le courant continu fourni à l'inverseur (31—36) étant détecté pour donner un signal correspondant au courant détecté, procédé caractérisé en ce qu'on fait passer ce signal dans un premier détecteur de maximum (41) ayant une constante de temps prédéterminée pour donner un signal de valeur maximale, ce signal de valeur maximale étant fourni à un premier régulateur (45) donnant un signal de commande de fréquence pour commander la fréquence du courant alternatif et ce signal de commande de fréquence étant diminué par le premier régulateur lorsque le signal de valeur maximale dépasse une valeur prédéterminée.

2. Procédé selon la revendication 1, caractérisé en ce que ce signal traverse un filtre passe-bas (42) donnant un signal de valeur moyenne redressé, ce signal de valeur moyenne redressé étant appliqué à un diviseur (46) qui divise ce signal de valeur moyenne redressé par un signal de commande de fréquence pour donner un premier signal de commande de tension, ce premier signal de commande de tension étant appliqué à un second régulateur (48) de façon que le signal de sortie du second régulateur change d'amplitude dans la même direction que le premier signal de commande de tension et en ce que le signal de sortie commande le courant alternatif.

3. Procédé selon la revendication 2, caractérisé en ce que les impulsions négatives qui apparaîssent dans le signal lors du blocage des moyens de commutation traversent un second détecteur de maximum (43) donnant un second signal de commande de tension et en ce que ce second signal de commande de tension est appliqué au second régulateur (48) de façon que le changement d'amplitude du signal de sortie soit opposé au changement engendré par le premier signal de commande de tension.

4. Dispositif pour commander un moteur à courant alternatif sans balai comportant un inverseur relié à une alimentation en courant continu (24, 25), cet inverseur se composant d'un moyen de commutation (31—36) pour brancher successivement les bornes (28, 29, 30) du moteur à courant alternatif sans balai (23) sur une borne positive (24) et une sur borne négative (25) de l'alimentation à courant continu et un moyen de détection (40) pour détecter le courant continu, dispositif caractérisé en ce que le moyen de détection est relié à un premier détecteur de maximum (41) ayant une constante de temps prédéterminée, ce premier détecteur de maximum donnant un signal de valeur maximale correspondant au courant détecté, ce premier détecteur de maximum étant relié à un premier régulateur (45) produisant un signal de commande de fréquence pour commander le déblocage et le blocage des moyens de commutation (31, 36) et le premier régulateur présente une fonction de transfert telle que le signal de commande de fréquence soit diminué par le premier régulateur lorsque le signal de valeur maximale dépasse une valeur prédéterminée.

5. Dispositif selon la revendication 4, caractérisé par un filtre passe-bas (42) relié au moyen de détection (40), ce filtre passe-bas donnant un signal de valeur moyenne redressé correspondant au courant détecté, un diviseur (46) relié au filtre passe-bas et au premier régulateur (45), ce diviseur donnant un premier signal de commande de tension en divisant le signal de valeur moyenne redressé par le signal de commande de fréquence et un second régulateur (48) relié au diviseur pour donner un signal de sortie dont l'amplitude change dans le même sens que le premier signal de commande de tension, le signal de sortie commandant le moment du déblocage des moyens de commutation (31—36).

6. Dispositif selon la revendication 4, caractérisé par un second détecteur de maximum (43) relié au moyen de détection (40), ce second détecteur de maximum donnant un second signal de commande de tension correspondant aux impulsions négatives détectées lorsque les moyens de commutation (31—36) sont bloqués, le second détecteur de maximum étant relié au second régulateur (48) de façon qu'une variation d'amplitude du second signal de commande de tension entraîne un changement d'amplitude du signal de sortie opposé au changement engendré par le premier signal de commande de tension.

20

21

201

39

19

202

Fig. 1

Fig. 2

Fig. 3

0 083 326

Fig. 4

Fig. 5